# EUROPÄISCHE PATENTSCHRIFT

(11) **EP 2 470 344 B1**
(45) Veröffentlichungstag und Bekanntmachung des Hinweises auf die Patenterteilung: **14.05.2014**
(21) Anmeldenummer: 10760611.3
(22) Anmeldetag: 25.09.2010
(51) Int. Cl.: B29C 44/56, B29C 59/02, A61G 7/10, B29K 105/04, A61G 1/01

(54) **PERSONENTRANSPORTVORRICHTUNG**
PASSENGER TRANSPORTATION DEVICE
DISPOSITIF DE TRANSPORT DE PERSONNES

(30) Priorität: 05.10.2009 DE 102009048319
(43) Veröffentlichungstag der Anmeldung: 04.07.2012
(73) Patentinhaber: Gockel-Böhner, Doris, 91601 Dombühl (DE)
(72) Erfinder: GOCKEL-BÖHNER, Hubert, 91601 Dombühl (DE)
(74) Vertreter: Dr. Weitzel & Partner
(86) Internationale Anmeldenummer: PCT/EP2010/005877
(87) Internationale Veröffentlichungsnummer: WO 2011/042125

(56) Entgegenhaltungen:
- EP-A1- 1 215 034
- EP-A2- 1 621 176
- DE-A1- 3 524 574
- US-A1- 2004 157 050

## Beschreibung

Die vorliegende Erfindung betrifft eine Personentransportvorrichtung und ein Verfahren zum Herstellen derselben, wobei die Personentransportvorrichtung einen starren Körper umfasst, um den ein auf dem Körper gleitbares Endlosband geschlungen ist, und insbesondere aus ausschließlich diesen beiden Bauteilen besteht.

Eine solche Personentransportvorrichtung, auch Gleitvorrichtung oder Rollboard genannt, dient dem Transport einer Person aus einer ersten Position in eine zweite Position, insbesondere zur Verwendung bei der Umbettung von Personen auf dem Gebiet der Pflege, der Notfallambulanz und der Bestattung.

Im Stand der Technik kann man zwischen starren Transportvorrichtungen, wie sie in der Patentschrift DE 195 12 008 C1 und in der Patentschrift DE 38 06 470 C2 beschrieben werden, und zumindest in Richtung ihrer Längserstreckung biegeschlaffen Transportvorrichtungen, wie sie in der europäischen Patentanmeldung EP 1 621 176 A2 und in der Patentschrift DE 103 34 270 C5 beschrieben werden, unterscheiden. Die biegeschlaffen Transportvorrichtungen sind dabei als Weiterentwicklung der starren Transportvorrichtung anzusehen, da sie, ausgehend von den zuvor bekannten starren Transportvorrichtungen den Vorteil bieten, dass eine Person nicht nur im Liegen, sondern auch im Sitzen beispielsweise auf einem Stuhl oder auf einem Bett mit schräger Rückenlehne transportiert werden kann. Der Transport erfolgt dabei, wie auch bei den starren Transportvorrichtungen, dadurch, dass die zu transportierende beziehungsweise umzulagernde Person auf der einen Seite der Transportvorrichtung auf diese aufgeschoben, anschließend über die Transportvorrichtung hinweg und auf der anderen Seite heruntergeschoben wird, wobei die Transportvorrichtung eine raupenartige Bewegung dadurch ausführt, dass das Endlosband um den Körper, um den es geschlungen ist, gleitet.

Für die bestehenden Transportvorrichtungen, egal ob starr oder biegeschlaff, wurde ferner vorgeschlagen, einen Schaumstoff auf dem Körper beziehungsweise in dem Körper, um den das Endlosband gleitet, vorzusehen, um durch diesen Schaumstoff eine Polsterung des Körpers zu erreichen, damit die zu transportierende Person auf einer weichen Unterlage liegt. Ferner wurde vorgeschlagen, den Körper selbst aus Schaumstoff, insbesondere aus einer Vielzahl von PE-Schaumstoff-Elementen, herzustellen, die dann eine gewisse Steifigkeit haben müssen, um die Funktion der Transportvorrichtung zu gewährleisten, jedoch immer noch mit einer solchen Dichte ausgeführt wurden, dass die übliche nachgiebige Beschaffenheit des Schaumstoffes gewährleistet bleibt.

Auch auf anderen technischen Gebieten ist die Verwendung von Schaumstoff, insbesondere von PE-Schaumstoff, bekannt, als Verpackungsmaterial oder als Polsterung, um Oberfächen vor Druckstellen oder vor Zerkratzen zu schützen. Auch hier steht demnach wiederum die Nachgiebigkeit des Schaumstoffes im Vordergrund.

Zurückkommend auf die bekannten Personentransportvorrichtungen konnten diese zwar im Laufe der Zeit im Hinblick auf ihre flexible Einsatzmöglichkeit, ihr Gewicht und ihre Röntgenfähigkeit erheblich verbessert werden, und es ist möglich, dass auch eine einzige Pflegekraft oder Hilfskraft alleine eine Person beispielsweise aus einem Krankenbett auf ein anderes verlagert. In der Praxis ergeben sich jedoch immer dann Probleme, wenn überdurchschnittlich schwere Personen, insbesondere mit einem Körpergewicht von mehr als 100 oder sogar 200 Kilogramm, transportiert werden sollen, da die bisherigen Ausführungsformen, gerade die weiterentwickelten biegeschlaffen Personentransportvorrichtungen, dem Körpergewicht nicht standhalten, dadurch keinerlei Hohlräume oder Zwischenräume mit der Transportvorrichtung überbrückt werden können und somit ein Transport der Person schräg nach oben oder schräg nach unten von einer ebenen Unterlage aus, beispielsweise von einem Krankenbett auf einen vergleichsweise höheren OP-Tisch, oder über einen Zwischenraum hinweg, beispielsweise zwischen zwei Betten oder zwischen einem Bett und einem OP-Tisch, nicht möglich ist.

Die Offenlegungsschrift DE 169 27 645 A1 beschreibt eine Patientenlagerfläche insbesondere für den umlagerungsfreien Transport traumatisierter Patienten mit einem Formkörper aus Polyurethan, der beispielsweise an der Oberfläche eine weichelastische Schicht aufweist und an der Unterfläche hart und steif gestaltet ist, durch gezielte Veränderungen der Verfahrensparameter während des Schäumvorganges. Um eine geschlossene Oberfläche der Lagerfläche zu erzielen, die das Eindringen von Feuchtigkeit verhindert und die Reinigung der Lagerfläche erleichtert, ist der Schaumstoff-Formkörper von einer der Kontur des Formkörpers angepassten Hülle umgeben. Die Hülle kann durch eine Folie, Kunststoffschalen oder durch das Aufsprühen einer Haut mit einem mit dem Kunststoffschaum verträglichen Werkstoff erzeugt werden.

DE 35 24 574 A1 beschreibt ein Verfahren zur Erzeugung von Faltstreifen an thermoformbaren Schaumstoffbahnen oder -matten und danach hergestellte Schaumstoffbahnen oder matten.

Der vorliegenden Erfindung liegt die Aufgabe zugrunde, eine Personentransportvorrichtung sowie ein Verfahren zum Herstellen derselben anzugeben, welche auch den Transport besonders schwerer Personen über Hohlräume oder Zwischenräume hinweg sowie ein Anheben oder Tragen der Person mittels der Personentransportvorrichtung ermöglicht.

Die erfindungsgemäße Aufgabe wird durch eine Personentransportvorrichtung beziehungsweise ein Verfahren zum Herstellen derselben gemäß den unabhängigen Ansprüchen gelöst. In den abhängigen Ansprüchen sind vorteilhafte und besonders zweckmäßige Ausgestaltungen der Erfindung angegeben.

Die erfindungsgemäße Personentransportvorrichtung, welche einen starren Körper aufweist, um den ein auf dem Körper gleitbares Endlosband geschlungen ist, sieht zwar grundsätzlich einen Werkstoff für den Körper vor, der herkömmlich bereits für entsprechende Körper von Transportvorrichtungen eingesetzt wurde, nämlich Schaumstoff, insbesondere PE-Schaumstoff. Jedoch wird dieser Werkstoff nun erstmalig derart behandelt, dass er seine bisher bevorzugt eingesetzten Eigenschaften verliert, nämlich seine große Nachgiebigkeit, um Druckstellen zu vermeiden, und stattdessen eine vergleichsweise harte und äußerst wenig nachgiebige Oberfläche aufweist. Im Einzelnen wird der Körper aus einem insbesondere unter Druckbeaufschlagung an seiner Oberfläche derart thermisch behandelten Schaumstoff hergestellt, dass sich eine geschlossenporige und wasserdichte Oberfläche ergibt und der von dieser Oberfläche umhüllte Schaumstoff eine Dichte von 50 kg/m³ oder mehr aufweist. Hierdurch entsteht ein Körper mit einer auf dem Gebiet der eingangs beschriebenen Transportvorrichtungen bisher unerreichten Festigkeit, welche nicht nur der Belastung mit Personen mit einem Körpergewicht von bis zu 200 Kilogramm oder sogar bis zu 300 Kilogramm im Allgemeinen stand hält, sondern welche auch ermöglicht, dass die Person mit der Personentransportvorrichtung getragen werden kann, ohne dass die Personentransportvorrichtung zerbricht oder zerreißt. Das Gewicht der Personentransportvorrichtung selbst konnte erfindungsgemäß gleichzeitig gering gehalten werden, und die Oberflächenbeschaffenheit kann unter hygienischen Gesichtspunkten als ideal bezeichnet werden. Es ist nicht mehr zwingend notwendig, eine geschlossene Oberfläche durch Aufbringen eines zweiten Materials auf dem Schaumstoff zu erreichen, sondern der Schaumstoff kann die geschlossene Oberfläche selbst ausbilden.

Ein weiterer Vorteil der erfindungsgemäßen Personentransportvorrichtung ist in der schattenfreien Röntgenfähigkeit zu sehen, das bedeutet, dass eine Person liegend auf der Personentransportvorrichtung geröntgt werden kann, ohne dass das Röntgenbild durch Schatten der Personentransportvorrichtung gestört wird.

Besonders vorteilhaft weist Schaumstoff des Körpers, insbesondere nachdem er komprimiert wurde und seine Oberfläche, welche die äußere Oberfläche des Körpers darstellt, derart thermisch behandelt wurde, dass er in seinem komprimierten Zustand dauerhaft verbleibt, eine Dichte von 60 kg/m³ oder mehr auf.

Um eine antibakteriell behandelbare Oberfläche zu erreichen, welche insbesondere chemisch inert ist, wird als Schaumstoff vorzugsweise ein PE-Schaumstoff (Polyethylen-Schaumstoff) verwendet.

Die maximale Wasseraufnahme des Schaumstoffs, aus welcher der Körper hergestellt ist, beträgt nach 28 Tagen gemäß DIN 53428 weniger als 2 Vol.-% oder 1 Vol.-%. Die Zugfestigkeit, welche insbesondere durch Einbringen eines Fadengeleges, das insbesondere mit dem Schaumstoff verschmolzen ist, erhöht werden kann, beträgt vorteilhaft 70 N oder mehr.

Weiterhin weist der Körper eine Stauchhärte gemäß ISO 844 bei einer Stauchung von 10 % von 100 kPa (Kilopascal), bei einer Stauchung von 25 % von 120 kPa und bei einer Stauchung von 50 % von 200 kPa auf. Die Bruchdehnung kann beispielsweise 125 % oder mehr betragen, insbesondere gemäß ISO 1798.

Gemäß einer vorteilhaften Ausführungsform beträgt die Zugfestigkeit gemäß ISO 1798 572 kPa oder mehr.

Aufgrund seiner thermisch behandelten Oberfläche kann der Körper einen Arbeitstemperaturbereich von -60 bis +90 °C oder sogar bis zu 120 oder 130 °C aufweisen, insbesondere bei einer Materialschrumpfung im genannten vergleichsweise hohen Temperaturbereich von weniger als 5 %.

Gemäß einer Ausführungsform der Erfindung besteht der Körper aus einem einzigen Schaumstoffelement, das dann unmittelbar von dem Endlosband ohne Zwischenschaltung einer weiteren Schicht umschlungen sein kann. Ein solches einziges Schaumstoffelement kann wiederum als ein einziges starres Element ausgeführt sein. Gemäß einer alternativen Ausführungsform sind zwei starre Elemente des einzigen Schaumstoffelementes über einen gelenkigen Bereich in dem Schaumstoff, der insbesondere durch eine noch stärkere Komprimierung des Schaumstoffs in diesem Bereich erreicht werden kann, miteinander verbunden, sodass zwei Bereiche des Körpers, insbesondere zwei Hälften des Körpers zum volumenreduzierten Transport desselben aufeinandergeklappt werden können.

Das erfindungsgemäße Verfahren sieht das Einbringen eines Schaumstoffes in eine Form, umfassend wenigstens zwei Formteile, die miteinander einen Formenhohlraum, auch Formennest genannt, ausbilden, vor. Der Schaumstoff wird in dem Formenhohlraum komprimiert, entweder indem die wenigstens zwei Formteile aufeinander zu bewegt werden - selbstverständlich reicht hierbei die Bewegung eines Formteils, während das andere stationär gehalten wird, aus, sodass sich das Volumen des zwischen den Formteilen eingeschlossenen Raumes bis zum Bilden eines geschlossenen Formenhohlraumes reduziert, und/oder indem der Schaumstoff in einem solchen Maße druckbeaufschlagt in den Formenhohlraum eingebracht wird, dass er beim Einbringen komprimiert wird. Die Komprimierung kann auch wie eine leichte Komprimierung beispielsweise von weniger als 10 Prozent oder von 5 bis 15 Prozent, insbesondere 10 Prozent ausreichen.

In dem mehr oder minder stark komprimierten Zustand, wird zumindest die äußere Oberfläche des Schaumstoffes derart erhitzt, dass sich eine geschlossenporige, wasserdichte äußere Oberfläche bildet, welche den Schaumstoff in dem komprimierten Zustand hält beziehungsweise eine Expansion vermeidet. Auch ist es möglich, den Schaumstoff derart durchzuerhitzen, dass er in dem komprimierten Zustand zu einem vergleichsweise starren Körper verschmilzt. Nach der thermischen Behandlung kann der Schaumstoff dann aus der Form entnommen werden und sofort oder gemäß einer alternativen Ausführungsform unmittelbar vor Gebrauch durch ein Endlosband umschlungen werden.

Insbesondere, wenn der Körper im Bereich seiner axialen Enden Öffnungen aufweist, um Griffe auszubilden, so kann der Schaumstoff im Bereich dieser Griffe vergleichsweise stärker komprimiert werden, sodass seine Festigkeit beziehungsweise seine Dichte noch weiter zunimmt. Auch ist es gemäß dem erfindungsgemäßen Verfahren möglich, ein Fadengelege oder eine sonstige Verstärkung in den Schaumstoff einzubringen, insbesondere mit diesem zu verschmelzen.

Wenn der Schaumstoff zu zwei gelenkig zueinander klappbaren starren Elementen verarbeitet wird, so kann im Bereich des Scharniers beziehungsweise des die beiden Elemente verbindenden gelenkigen Bereiches, insbesondere ausschließlich aus Schaumstoff, zusätzlich eine Verstärkung eingebracht werden, insbesondere indem eine weitere Schaumstoffschicht auflaminiert oder sandwichartig einlaminiert wird.

Gemäß einer Ausführungsform weist der Körper aus Schaumstoff, nachdem er komprimiert und thermisch behandelt wurde, eine äußere Oberfläche mit Rippen auf, die in Querrichtung des Körpers und somit in Bewegungsrichtung des Endlosbandes verlaufen. Diese Rippen ermöglichen einen noch geringeren Reibwiderstandswert beim Rotieren des Endlosbandes um den Körper. Insbesondere weist der Körper eine maximale Dicke von 20 bis 30 mm, vorteilhaft von 20 mm auf. Wenn ein gelenkiger Bereich zwischen zwei starren Schaumstoffelementen vorgesehen ist, so kann der gelenkige Bereich, der, wie dargestellt durch den Schaumstoff selbst gebildet werden kann, insbesondere durch verstärktes Komprimieren des Schaumstoffes bei der Herstellung des Körpers, eine Dicke von 4 bis 5 mm aufweisen.

Die Erhitzung des Schaumstoffs kann beispielsweise auf eine Temperatur von 140 °C bis 160 °C erfolgen. Die Temperatur, auf welche der Schaumstoff erhitzt wird, insbesondere in dem genannten Temperaturbereich, wird vorteilhaft für eine vorbestimmte Zeitspanne, beispielsweise von einer oder mehreren Minuten gehalten, wobei insbesondere vor dem Öffnen der Form, in welche der Schaumstoff zur Erhitzung eingebracht ist, abgewartet wird, bis der Schaumstoff deutlich unter die Erhitzungstemperatur, beispielsweise auf unter 130 °C, 120 °C oder 100 °C, insbesondere auf 50 °C oder weniger abgekühlt ist.

Die Erfindung soll nachfolgend anhand eines Ausführungsbeispiels exemplarisch beschrieben werden.

Es zeigen:
- Figur 1: eine schematische Draufsicht auf eine erfindungsgemäß ausgeführte Personentransportvorrichtung in einem gebrauchsfertigen Zustand;
- Figur 2: die Personentransportvorrichtung aus der Figur 1 im zusammengeklappten Zustand;
- Figur 3: die beiden aufeinandergeklappten axialen Enden des Körpers entsprechend dem Zustand in der Figur 2.

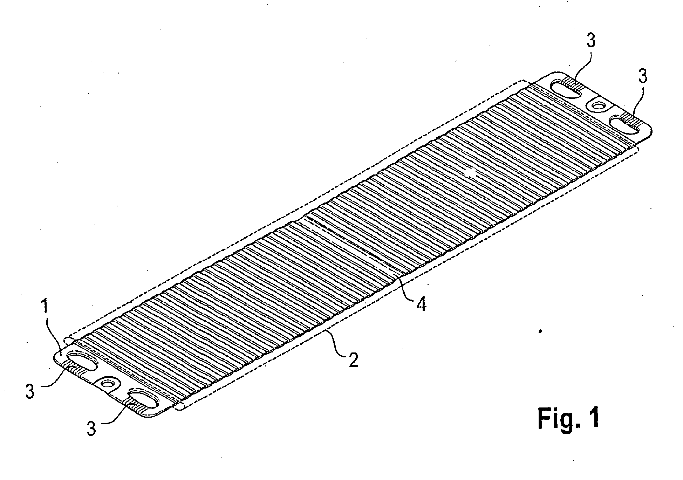

In der Figur 1 erkennt man den starren Körper 1, um welchen das Endlosband 2 gleitbar geschlungen ist. Wie man sieht, ragen die beiden axialen Endbereiche des starren Körpers 1 außen aus dem Gleitband heraus, sodass die Griffe 3, die durch Öffnungen in dem Körper 1 im Bereich der axialen Enden ausgebildet werden, gegriffen werden können, um die Personentransportvorrichtung mit einer darauf liegenden Person zu tragen.

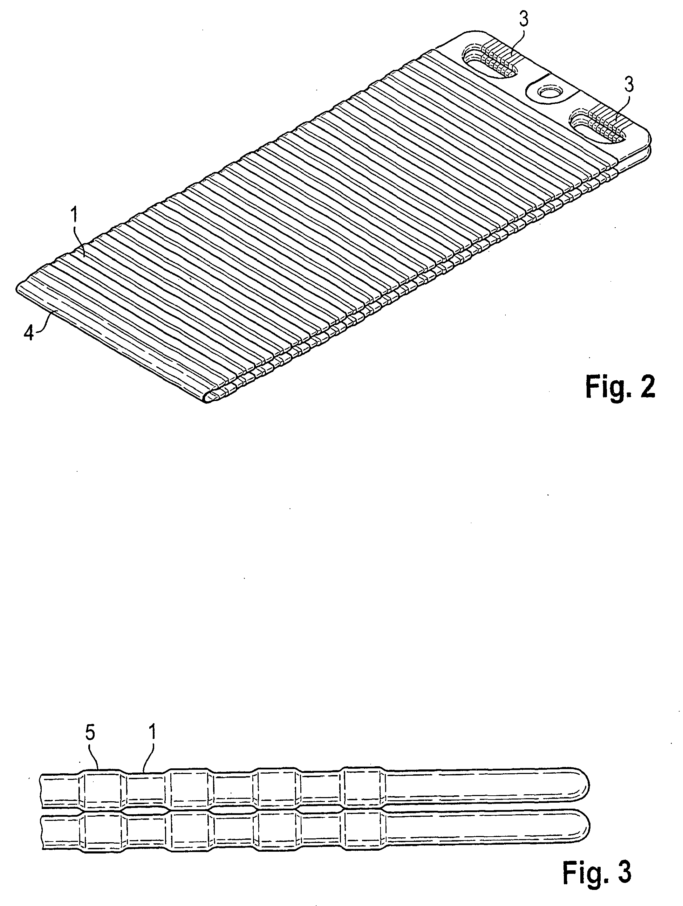

In der Figur 2 ist die Personentransportvorrichtung aus der Figur 1 mit entferntem Endlosband und im zusammengeklappten Zustand gezeigt. Hierzu ist im Bereich der axialen Mitte des Körpers 1 ein Gelenk 4 ausgeführt, welches einteilig mit den gelenkig aneinander angeschlossenen starren Hälften des Körpers 1 ausgeführt ist. Die Herstellung beider starren Hälften des Körpers 1 zusammen mit dem Gelenk 4 erfolgt dabei in einem gemeinsamen Schritt allein durch das Einbringen und Komprimieren des Schaumstoffes in einer Form mit anschließender thermischer Behandlung der Oberfläche oder einer Durcherhitzung des gesamten Schaumstoffes. Im Bereich des Gelenkes 4 wird der in die Form eingebrachte Schaumstoff einfach stärker komprimiert, sodass er eine geringere Stärke aufweist als im Bereich der aneinander angeschlossenen starren Elemente, insbesondere starren Hälften, wie hier gezeigt. Auch im Bereich der axialen Enden mit den Griffen 3 kann der Schaumstoff vergleichsweise stärker komprimiert sein und somit eine höhere Dichte aufweisen, um hier eine besonders hohe Festigkeit zur Verfügung zu stellen. Die vergleichsweise stärkere Komprimierung ist dabei auch bei einer identischen oder sogar größeren Stärke des Körpers in diesem Bereich, verglichen mit den benachbarten weniger komprimierten Bereichen.

Obwohl die Personentransportvorrichtung in der Figur 2 im zusammengeklappten Zustand ohne Endlosband gezeigt ist, wäre es alternativ auch möglich, diese umspannt von dem Endlosband zusammenzuklappen.

In der Figur 3 erkennt man nochmals die hier gewählte besondere gerippte Oberfläche des Körpers 1. Die einzelnen hervorstehenden Rippen 5 ermöglichen ein besonders leichtes Gleiten des Endlosbandes auf dem Körper 1.

## Patentansprüche

1. Personentransportvorrichtung für den Transport einer Person aus einer ersten Position in eine zweite Position;
mit einem starren Körper (1),
wobei der Körper (1) aus einem an seiner Oberfläche derart thermisch behandelten Schaumstoff hergestellt ist, dass die Oberfläche geschlossenporig und wasserdicht verschlossen ist, und der Schaumstoff eine Dichte von 50 kg/m³ oder mehr aufweist, **dadurch gekennzeichnet, dass** um den Körper ein auf dem Körper (1) gleitbares Endlosband (2) geschlungen ist, und die maximale Wasseraufnahme des Körpers (1) nach 28 Tagen gemäß DIN 53428 weniger als 2 Vol.-% beträgt und/oder der Körper (1) eine Stauchhärte mit einer Stauchung von 10 % bei 100 kPa besitzt.

2. Personentransportvorrichtung gemäß Anspruch 1, **dadurch gekennzeichnet, dass** der Körper (1) aus PE-Schaum hergestellt ist, insbesondere mit einer Dichte von 60 kg/m³ oder mehr.

3. Personentransportvorrichtung gemäß einem der Ansprüche 1 oder 2, **dadurch gekennzeichnet, dass** der Körper (1) aus genau einem oder aus zwei über ein Scharnier, das insbesondere durch den Schaumstoff selbst ausgebildet wird, verbundenen starren Elementen besteht.

4. Personentransportvorrichtung gemäß einem der Ansprüche 1 bis 3, **dadurch gekennzeichnet, dass** der Körper (1) an seinen beiden axialen Enden mit Öffnungen im Schaumstoff versehen ist, um Griffe (3) auszubildert, und der Schaumstoff im Bereich der Griffe (3) eine vergleichsweise größere Dichte als im benachbarten, vom Endlosband umschlungenen Bereich aufweist.

5. Personentransportvorrichtung gemäß einem der Ansprüche 1 bis 4, **dadurch gekennzeichnet, dass** in den Schaumstoff ein Fadengelege oder eine Verstärkung eingebracht ist, welche insbesondere mit diesem verschmolzen ist.

6. Verfahren zum Herstellen einer Personentransportvorrichtung gemäß einem der Ansprüche 1 bis 5, mit den folgenden Schritten:
Einbringen eines Schaumstoffes in eine Form, umfassend wenigstens zwei Formteile, die miteinander einen Formenhohlraum ausbilden;
Erhitzen zumindest der äußeren Oberfläche des Schaumstoffes oder des gesamten Schaumstoffes in dem Formenhohlraum, bis eine geschlossenporige, wasserdichte, verschmolzene Oberfläche entsteht, die eine Entspannung des Schaumstoffes beim Öffnen des Formenhohlraumes vermindert oder vermeidet;
Entfernen des Schaumstoffes aus der Form **gekennzeichnet durch** das anschließendes Umschlingen desselben mit einem Endlosband, wobei
der Schaumstoff druckbeaufschlagt in den Formenhohlraum eingebracht wird und/oder nach dem Einbringen **durch** Aufeinanderzubewegen der wenigstens zwei Formteile, um den Formenhohlraum zu schließen, komprimiert wird.

7. Verfahren gemäß Anspruch 6, **dadurch gekennzeichnet, dass** der Schaumstoff im Bereich der beiden axialen Enden des Formenhohlraumes stärker komprimiert wird als im axial benachbarten Bereich und im stärker komprimierten Bereich Griffe durch Ausformen von Durchgangsöffnungen im Schaumstoff ausgebildet werden.

8. Verfahren gemäß einem der Ansprüche 6 oder 7, **dadurch gekennzeichnet, dass** im axial mittleren Bereich der Schaumstoff vergleichsweise stärker als in den beiden benachbarten axialen Bereichen komprimiert wird, um ein Scharnier auszubilden.

9. Verfahren gemäß einem der Ansprüche 6 bis 8, **dadurch gekennzeichnet, dass** das Erhitzen zumindest der äußeren Oberfläche des Schaumstoffes oder gesamten Schaumstoffes in dem Formenhohlraum im komprimierten Zustand erfolgt, bis eine geschlossenporige, wasserdichte, im komprimierten Zustand verschmolzene Oberfläche entsteht.

10. Verfahren gemäß einem der Ansprüche 6 bis 9, **dadurch gekennzeichnet, dass** das Erhitzen des Schaumstoffes bis auf eine Temperatur von 140° C bis 160 °C erfolgt, wobei die Temperatur eine vorbestimmte Zeitspanne gehalten wird.

## Claims

1. A person transport device for the transport of a person from a first position into a second position;
having a rigid body (1), whereas
the body (1) is made of a foam thermally treated in such a way at its surface that the surface is with closed pores and water-tight, and the foam has a density of 50 kg/m³ or more, **characterised in that** an endless belt (2) which is slidable around the body (1) is looped around the body and the maximum water intake of the body (1) is lower than 2 Vol.-% after 28 days according to DIN53428 and/or the body (1) has a compression hardness with a compression of 10% at 100 kPa.

2. The person transport device according to claim 1, **characterised in that** the body (1) is made of PE foam, in particular with a density of 60 kg/m³ or more.

3. The person transport device according to one of the claims 1 or 2, **characterised in that** the body (1) consist of exactly one or of two rigid elements connected via a hinge, which is formed in particular by the foamed material itself.

4. The person transport device according to one of the claims 1 to 3, **characterised in that** the body (1) is provided at both its axial ends with openings in the foamed material, to form handles (3), and the foamed material has in the region of the handles (3) a comparatively larger density than in the area enveloped by the endless belt.

5. The person transport device according to one of the claims 1 to 4, **characterised in that** laid threads or a reinforcement is inserted into the foamed material, which in particular is fused therewith.

6. A method for manufacturing a person transport device according to one of the claims 1 to 5, with the following steps:
Placing a foamed material into a mould, comprising at least two mould parts, which together form a mould cavity;
Heating at least the external surface of the foamed material or of the whole foamed material in the mould cavity, until a water-tight, fused surface with closed pores is formed which reduces or avoids relaxation of the foamed material when opening the mould cavity;
Removing the foamed material from the mould, **characterised by** the subsequent looping of the same with an endless belt, whereas the foamed material is introduced under pressure into the mould cavity and/or is compressed after introduction by moving said at least two mould parts towards each other, to close the mould cavity.

7. The method according to claim 6, **characterised in that** the foamed material is compressed more strongly in the area of both axial ends of the mould cavity than in the axially neighbouring area and handles are formed in the more strongly compressed area by shaping passage openings in the foamed material.

8. The method according to any of the claims 6 or 7, **characterised in that** in the axially central area the foamed material is compressed comparatively more strongly than in both neighbouring axial area, to form a hinge.

9. The method according to one of the claims 6 to 8, **characterised in that** the heating-up at least of the external surface of the foamed material or of the whole foamed material takes place in the mould cavity in compressed condition until achieving a water-tight, fused surface with closed pores in compressed condition.

10. The method according to one of the claims 6 to 9, **characterised in that** the heating-up of the foamed material takes place up to a temperature of 140°C to 160°C whereas the temperature is kept for a predetermined time span.

## Revendications

1. Dispositif de transport de personne permettant de déplacer une personne d'une première position vers une seconde position;
comprenant un corps rigide (1), où le corps (1) est constitué d'une mousse traitée thermiquement en surface de telle sorte que la surface est scellée hermétiquement avec des pores fermés et de manière étanche à l'eau, la mousse présentant une densité de 50 kg/m³ ou plus, **caractérisé en ce qu'**un convoyeur sans fin (2) coulissant sur le corps (1) forme une boucle autour du corps (1) et que l'absorption d'eau maximale du corps (1) au bout de 28 jours est inférieure à 2 vol. selon la norme DIN53428 et/ou le corps (1) possède une résistance à la compression à 100 kPa pour une compression de 10%.

2. Dispositif de transport de personne selon la revendication 1, **caractérisé en ce que** le corps (1) est en mousse PE, en particulier d'une densité de 60 kg/m³ ou plus.

3. Dispositif de transport de personne selon l'une des revendications 1 ou 2, **caractérisé en ce que** le corps (1) se compose d'un ou de deux éléments rigides connectés par l'intermédiaire d'une charnière constituée en particulier de la mousse proprement dite.

4. Dispositif de transport de personne selon l'une des revendications 1 à 3, **caractérisé en ce que** le corps (1) est pourvu d'ouvertures au niveau de ses deux extrémités axiales dans la mousse pour constituer des poignées (3) et que la mousse présente dans la zone des poignées (3) une densité comparativement supérieure à celle de la zone voisine, entourée du convoyeur sans fin.

5. Dispositif de transport de personne selon l'une des revendications 1 à 4, **caractérisé en ce que** l'on introduit des fils posés ou un renforcement dans la mousse, qui est fusionnée en particulier avec ladite mousse.

6. Procédé de fabrication d'un dispositif de transport de personne selon l'une des revendications 1 à 5, comprenant les étapes suivantes:
Introduction d'une mousse dans un moule comprenant au moins deux parties de moule constituant ensemble une cavité de moule;
Chauffage au moins de la surface externe de la mousse ou bien de toute la mousse dans la cavité de moule jusqu'à obtention d'une surface fusionnée étanche à l'eau et aux pores fermés, pour réduire ou empêcher la dilatation de la mousse lors de l'ouverture de la cavité de moule;
Extraction de la mousse du moule, **caractérisé par** l'enveloppement subséquent de ladite mousse avec un convoyeur sans fin, où l'on introduit la mousse sous pression dans la cavité de moule et/ou l'on comprime ladite mousse après introduction par rapprochement desdites au moins deux parties de moule pour refermer la cavité de moule.

7. Procédé selon la revendication 6, **caractérisé en ce que** la mousse est comprimée plus fortement dans la zone des deux extrémités axiales de la cavité de moule que dans la zone voisine axialement et que dans la zone plus fortement comprimée, des poignées sont constituées dans la mousse par façonnage d'ouvertures de passage.

8. Procédé selon l'une des revendications 6 ou 7, **caractérisé en ce que** dans la zone médiane axialement la mousse est comparativement plus fortement comprimée que dans les deux zones axiales voisines pour constituer une charnière.

9. Procédé selon l'une des revendications 6 à 8, **caractérisé en ce que** le chauffage au moins de la surface externe de la mousse ou de l'ensemble de la mousse dans la cavité de moule s'effectue à l'état comprimé jusqu'à obtention d'une surface fusionnée à l'état comprimé, étanche à l'eau et aux pores fermés.

10. Procédé selon l'une des revendications 6 à 9, **caractérisé en ce que** le chauffage de la mousse se déroule jusqu'à une température de 140°C à 160°C où l'on maintient la température pendant un laps de temps prédéterminé.
